# EUROPEAN PATENT SPECIFICATION

(11) **EP 2 174 723 B1**
(45) Date of publication and mention of the grant of the patent: **12.03.2014**
(21) Application number: 08790863.8
(22) Date of filing: 04.07.2008
(51) Int. Cl.: B05D 7/14, B32B 15/06, C23C 26/00, C23C 28/00, F16J 15/10, F16J 15/12

(54) **METHOD FOR PRODUCING NITRILE RUBBER METAL LAMINATE**
VERFAHREN ZUR HERSTELLUNG EINES NITRILKAUTSCHUK-METALL-LAMINATS
PROCÉDÉ POUR PRODUIRE UN STRATIFIÉ DE MÉTAL ET DE CAOUTCHOUC NITRILE

(30) Priority: 01.08.2007 JP 2007200527
(43) Date of publication of application: 14.04.2010
(73) Proprietor: NOK Corporation, Minato-ku Tokyo 105-8585 (JP)
(72) Inventor: HIGASHIRA, Toshihiro, Fujisawa-shi Kanagawa 251-0042 (JP); MORITANI, Yoichi, Nihonmatsu-shi Fukushima 964-0811 (JP); YOKOTA, Atsushi, Fujisawa-shi Kanagawa 251-0042 (JP)
(74) Representative: HOFFMANN EITLE
(86) International application number: PCT/JP2008/062132
(87) International publication number: WO 2009/016922

(56) References cited:
- EP-A1- 1 588 839
- JP-A- 06 335 990
- JP-A- 2000 006 308
- JP-A- 2000 141 538
- JP-A- 2003 246 975
- JP-A- 2003 334 885
- JP-A- 2004 217 851
- US-A- 5 510 191
- DATABASE WPI Week 200422 Thomson Scientific, London, GB; AN 2004-230707 XP002686989, & JP 2003 334885 A (NOK CORP) 25 November 2003 (2003-11-25)
- DATABASE WPI Week 200566 Thomson Scientific, London, GB; AN 2005-642534 XP002686990, & JP 2005 226064 A (NOK CORP) 25 August 2005 (2005-08-25)
- DATABASE CA [Online] CHEMICAL ABSTRACTS SERVICE, COLUMBUS, OHIO, US; 1 March 2007 (2007-03-01), "Nitrile rubber compositions with abrasion resistance for seals", XP002686991, retrieved from STN Database accession no. 146:207817 & JP 2007 039557 A (NOK CORP) 15 February 2007 (2007-02-15)
- DATABASE CA [Online] CHEMICAL ABSTRACTS SERVICE, COLUMBUS, OHIO, US; 1 March 2007 (2007-03-01), "nitrile rubber-metal laminates with good interlayer adhesion", XP002686992, retrieved from STN Database accession no. 146:207816 & JP 2007 038533 A (NOK CORP) 15 February 2007 (2007-02-15)

## Description

### TECHNICAL FIELD

The present invention relates to a process for producing a nitrile rubber-metal laminate, and more particularly to a process for producing a nitrile rubber-metal laminate effective for use as seal materials, etc.

### BACKGROUND ART

In the sections subject to large temperature changes as in the engine gasket sections, fretting occurs on the joint surfaces between the engine and the gasket owing to temperature changes. Rubber-metal laminates for use as gaskets involve such problems as development large shearing stresses due to, e.g. the fretting, peeling or abrasion of the rubber layer due to friction between the rubber layer and the metal, and the resulting peeling of the rubber layer from the metal.

To improve the friction-abrasion resistance characteristic of the rubber layer, carbon black has been so far generally used, but the carbon black hardly has the prevention of friction or abrasion of the rubber layer as used in the rubber-metal laminates. A method of applying a solution of PTFE, polyethylene resin, or the like to the rubber layer surface, thereby lowering the friction coefficient and reducing the abrasion of the rubber layer has been also so far proposed, but the peeling or abrasion of the films formed from these solution starts to take place, the rubber layer will be sometimes abraded in an instant. Thus, it is a task to improve the friction-abrasion resistance characteristics of the rubber layer itself. That is, so long as the adhesiveness of the rubber layer is not enough, the rubber layer will be inevitably peeled away, even if no abrasion of the rubber layer takes place when subjected to friction-abrasion, while even if the adhesiveness of the rubber layer is enough, the rubber layer will be abraded, so long as the abrasion resistance of the rubber layer is not enough. Thus, to improve the abrasion resistance of the rubber layer in a rubber-metal laminate, it is necessary to improve the abrasion resistance of the rubber layer itself and also to enhance the adhesiveness of the rubber to the metal at the same time.

To form a metal-rubber composite requiring a resistance to water or LLC (long life coolant), stainless steel has been mainly used. Stainless steel-rubber composite prepared by directly applying a vulcanizable adhesive to the stainless steel and bonding the rubber thereto by vulcanization has a poor resistance to water and LLC, and immersion tests of the composite show occurrence of peeling of the rubber layer due to adhesion failures. To overcome the adhesion failures, a coating type chromate treatment of stainless steel surface has been so far tried as a pretreatment before the vulcanizable adhesive application, thereby improving the resistance to water or LLC. However, the coating type chromate treatment involves hexavalent chromium ions, which are not preferable from the viewpoint of environmental pollution control measure.

In the production of rubber-metal laminate, the present applicant have so far proposed various vulcanizable adhesive compositions based on alkoxysilane as adhesive between the metal and the rubber. The proposed vulcanizable adhesive compositions are suitable for adhesion to chemically or physically surface-treated metal surfaces, but unsuitable for untreated metal surfaces, because the resulting adhesiveness is not so good as that of, e.g. the coating type chromate-treated stainless steel sheet.
Patent Document 1 : JP-A-7-34054
Patent Document 2 : JP-A-7-216309
Patent Document 3 : JP-A-8-209102
Patent Document 4 : JP-A-9-3432
Patent Document 5 : JP-A-9-40916
Patent Document 6 : JP-A-9-132758
Patent Document 7 : JP-A-10-7990
Patent Document 8 : JP-A-10-8021
Patent Document 9 : JP-A-11-1672
Patent Document 10 : JP-A-2001-226642

The present applicant also have as for proposed a rubber-metal gasket, which comprises a composite type chromate-treated metallic sheet, and a (hydrogenated) nitrile rubber laid thereon through a phenol resin-containing adhesive, as a rubber-metal laminate gasket. Even if the proposed phenol resin-containing adhesive is applied to the untreated stainless steel sheet, the resulting adhesiveness is not so good as that of the composite type chromate-treated stainless steel sheet, and any good liquid resistance cannot be obtained. Furthermore, even if various commercially available primers directed to the phenolic resin-based vulcanizable adhesive are used in the adhesion to the stainless steel sheet as a pretreatment, and sufficient adhesiveness and water resistance cannot be obtained.
Patent Document 11 : JP-A-11-58597
Patent Document 12 : JP-A-2000-6308
Patent Document 13 : JP-A-2000-141538

Actually, as disclosed in the following Patent Document 14, the liquid resistance can be improved by applying a silane-based undercoating agent to a metallic sheet, followed by further application of a phenol-based over coating adhesive thereto, but the resulting adhesiveness is also not so good as that of the coating type chromate-treated stainless steel sheet, with the result of such problems as rubber layer peeling, when used in nowadays engines or non-freezing solutions.
Patent Document 14 : JP-A-2003-334885

Patent Documents EP 1 588 839 A1 and US 5 510 191 A disclose methods for producing a nitrile rubber-metal laminate by applying to an adhesive layer formed on one side of a metallic sheet a solution prepared by dissolving a composition comprising a nitrile rubber, carbon black and silica.

### DISCLOSURE OF THE INVENTION

### PROBLEM TO BE SOLVED BY THE INVENTION

The object of the present invention is to provide a process for producing a rubber-metal laminate capable of preventing the rubber layer from peeling by water or a non-freezing solution, and abrasion of the rubber layer and rubber flow due to elevated temperatures or higher loads, without applying a coating type chromate treatment to the metallic sheet.

### MEANS FOR SOLVING THE PROBLEM

The object of the present invention can be attained by coating an adhesive layer formed on one side or both sides of a metallic sheet with a nitrile rubber solution prepared by dissolving and dispersing into an organic solvent a nitrile rubber composition, which comprises 100 parts by weight of nitrile rubber, 40 parts by weight or more of carbon black having a DBP oil absorption amount of 30-100ml/100g (according to ASTM D1765-91), 15-100 parts by weight of silica having a particle size of 0.01-0.1µ m, 0-40 parts by weight of other inorganic fillers than the carbon black and the silica, and 5-20 parts by weight of an organic peroxide, and preferably furthermore 2-10 parts by weight of a silane coupling agent (and 0.5-5 parts by weight of a microcrystalline wax), followed by vulcanizing the coated layer, thereby forming a rubber layer.

### EFFECT OF THE INVENTION

The rubber-metal laminate produced by the present process has such remarkable effects as effective prevention from peeling by water or a non-freezing solution, abrasion of the rubber layer and rubber flow due to elevated temperatures or higher loads, and thus can be effectively used as seal materials, etc.

### BEST MODES FOR CARRYING OUT THE INVENTION

Nitrile rubber (NBR) for use in the present invention is an acrylonitrile-butadiene copolymer rubber having a bonded acrylonitrile content of 18-48%, preferably 31-42%, and a Mooney viscosity ML₁₊₄(100°C) of 30-85, preferably 40-70. Actually, commercially available nitrile rubber can be used as such. When the bonded acrylonitrile content is less than lower limit of the range, the adhesiveness to the adhesive as used for the lamination of the rubber layer will be unsatisfactory, whereas when the bonded acrylonitrile content is more than upper limit of the range the cold resistance will be deteriorated. When the Mooney viscosity is less than lower limit of the range, the friction-abrasion resistance characteristics will be unsatisfactory, whereas when the Mooney viscosity is more than upper limit of the range, the kneadability will be deteriorated. The nitrile rubber is admixed with carbon black having specific properties, silica and with an organic peroxide to provide a nitrile rubber composition.

Carbon black for use in the present invention is of such a type as a DBP oil absorption amount of 30-100ml/100g, preferably 40-80ml/100g, as classified in ASTM D1765-05, for example, commercially available carbon black such as MT, SRF, etc. When carbon black having a higher DBP oil absorption amount than upper limit of the range, for example, HAF carbon black, etc. is used, the particle sizes of the carbon black will be larger in the case the nitrile rubber composition dissolved into an organic solvent, because of poor dispersibility of the carbon black in the rubber resulting in formation of coagulation umps consisting mainly of carbon black on the coated surface, thereby roughening the surface. This will lead to coating film defects, that is, occurrence of abrasion at locations of large carbon black particles. In other words, this is one factor of deteriorating the abrasion resistance. When carbon black having a lower DBP oil absorption amount than lower limit of the range is used, on the other hand, the strength and the abrasion resistance will be lowered. Carbon black can be used in a proportion of 40 parts by weight or more, preferably 50-100 parts by weight, on the basis of 100 parts by weight of nitrile rubber. When the carbon black is used in a proportion of less than lower limit of the range parts by weight, any desired adhesiveness cannot be obtained, and peeling of the rubber layer will occurs when exposed to friction and abrasion.

Silica for use in the present invention is amorphous silica having particle sizes of 0.01-0.1µm, such as dry process white carbon prepared by thermally decomposing silicon halide, or an organic silicon compound, or by reducing silica sand by heating and air-oxidizing the vaporized SiO ; wet process white carbon prepared by thermally decomposing sodium silicate ; or the like. When the particle size of silica is more than upper limit of the range, the abrasion resistance will be deteriorated, whereas when the particle size of silica is less than lower limit of the range, the silica particles will be coagulated and agglomerated at the time of dispersing the silica into rubber, also deteriorating the abrasion resistance. Commercially available silica, for example, Nipsil LP, etc. products of Nippon Silica Kogyo Co. can be used as such. Silica having a specific surface area of about 20 to about 300m²/g, preferably about 50 to about 250m²/g, can be generally used. Owing to the cost, easy handling and good abrasion resistance, though the abrasion resistance is not so good as that of the generally used carbon black, the white carbon is effective for improving the adhesiveness of the rubber layer to the adhesive and rubber flow at elevated temperatures and high specific pressures.

Silica can be used in a proportion of 15-100 parts by weight, preferably 30-80 parts by weight, on the basis of 100 parts by weight of nitrile rubber. When the silica is used in a proportion of less than lower limit of the range, any satisfactory adhesiveness to the desired metal cannot be obtained, resulting in peeling of the rubber layer when exposed to friction and abrasion, whereas in the case of a proportion of more than upper limit of the range the rubber hardness will be increased, loosening the rubber elasticity.

The silica has a tendency to undergo coagulation of silica particles themselves due to the hydrogen bonding of silanol groups as its surface functional groups. To improve the dispersion of silica particles into the rubber, it is necessary to prolong the kneading time. The silica surfaces are hydrophilic due to the nature of the silanol groups, whereas the rubber is oleophilic, so the silica and the rubber will repel each other and the solubility in a solvent of the rubber compounds as left standing for a long time will be lowered, generating coagulation of the silica. As a result, the silica particles in the rubber paste-solving solution will be agglomerated, causing to roughen the coating film surface and lower the abrasion resistance.

To prevent such coagulation of the silica, a silane coupling agent is added thereto preferably at the time of silica kneading, whereby the silica surfaces can be treated with the silane coupling agent and the coagulation can be prevented. Generally, the silane coupling agent XSi(OR)₃ as used in the rubber industry consists of alkoxy groups capable of reacting with inorganic materials such as silica, etc., and a functional group capable of reacting with organic materials such as rubber, etc., it is presumed that the dehydration-condensation reaction of silanol groups on the silica surfaces with silanol groups formed by hydrolysis of the alkoxy groups of the silane coupling agents, that is, coupling reaction of the silica with the silane coupling agent, can reduce the silanol groups on the silica particle surfaces and improve dispersion of the silica particles into the rubber, whereas the gelation reaction of the another functional group of the silane coupling agent with rubber molecules can promote chemical bonding between the silane coupling agent and the rubber molecules to form a reinforced structure.

The silane coupling agent for use in the present invention is not particularly limited, so far as it is generally used in the rubber industry, and includes, for example, vinyltrichlorosilane, vinyltriethoxysilane, vinyltrimethoxysilane, vinyltris(β -methoxyethoxy)silane, β -(3,4-epoxycyclohexyl)ethyltrimethoxysilane, γ - glycidoxypropyltrimethoxysilane, γ -glycidoxypropyltriethoxysilane, γ - glycidoxypropylmethyldiethoxysilane, γ - methacryloxypropyltrimethoxysilane, γ - methacryloxypropyltriethoxysilane, γ - methacryloxypropylmethyldimethoxysilane, γ - methacryloxypropylmethyldiethoxysilane, N-β-(aminoethyl)-γ - aminopropyltrimethoxysilane, N- β-(aminoethyl)- γ - aminopropylmethyldimethoxysilane, N-phenyl- γ - aminopropyltrimethoxysilane, γ-chloropropyltrimethoxysilane, γ-mercaptopropyltrimethoxysilane, γ -aminopropyltriethoxysilane, bis[3-(triethoxysilyl)propyl] tetrasulfide, and such tetrasulfides as disclosed in the following Patent Document 15, etc., for example, γ - trimethoxysilylpropyldimethylthiocarbamyl tetrasulfide, γ - trimethoxysilylpropylbenzothiazyl tetrasulfide, etc.
Patent Document 15 : JP-A-6-248116

The silane coupling agent can be used in a proportion of 2-10 parts by weight on the basis of total of 100 parts by weight of nitrile rubber and 15-100 parts by weight of silica, or in a proportion of 3-30 parts by weight, preferably 5-20 parts by weight, on the basis of 100 parts by weight of silica. When the silane coupling agent is used in a proportion below the lower limit of the range, the silica will start to coagulate, sometimes roughening the coating surface, thereby deteriorating the abrasion resistance, whereas when used in a proportion above the upper limit of the range the rubber cross-linking density will be increased to deteriorate the sealability, generate cracks due to flexures after the heat aging and deteriorate the abrasion resistance after the heat deterioration.

When the reaction between the silica and the silane coupling agent is not enough in the rubber kneading step, microcrystalline wax or other inorganic fillers than the silica can be added thereto at the time of kneading to further prevent silica coagulation.

Microcrystalline wax having a melting point (JIS K-2235) of 60°C or higher can be used in a proportion of 0.5-5 parts by weight, preferably 1-3 parts by weight, on the basis of 100 parts by weight of nitrile rubber. The microcrystalline wax is kneaded with the nitrile rubber together with silica in the presence of the silane coupling agent to further prevent silica coagulation. In the case of a silica dispersion in a solvent, wax particles are adsorbed onto the surfaces of silica particles to further prevent silica coagulation. When the microcrystalline was is used in a proportion above the upper limit of the range, rubber flow will start to take place, if compressed under high specific pressure. When the microcrystalline wax is used in the absence of the silane coupling agent, the dispersibility can be improved just after the kneading, but silica coagulation will occur, for example, after left standing at 25°C for 10 days. This is not preferable.

The other inorganic fillers than silica include, for example, calcium carbonate, calcium silicate, aluminum silicate, magnesium silicate, alumina, etc., among which calcium carbonate is preferable, and can be used in a proportion of not more than 40 parts by weight, preferably 3-20 parts by weight, more preferably 5-10 parts by weight, on the basis of 100 parts by weight of nitrile rubber. Silica particles themselves can be prevented from coagulation by adding these inorganic fillers thereto, as shown relating to particle sizes of rubber paste in Example 8, which follows. However, when the inorganic fillers are used in a proportion more than upper limit of the range, peeling of the rubber will occurs, when exposed to friction and abrasion (refer to Comparative Example 4, which follows).

The silane coupling agent, microcrystalline wax, and inorganic fillers can be added, depending on the amount of silica, and thus in the case of a small amount of silica it is enough to add these in corresponding small proportions.

Organic peroxide for use in the present invention includes, for example, 1,1-di-t-butylperoxy-3,3,5-trimethylcyclohexane, di-t-butyl peroxide, t-butylcumyl peroxide, dicumyl peroxide, 2,5-dimethyl-2,5-di(t-butylperoxy)hexane, 2,5-dimethyl-2,5-di(t-butylperoxy)hexine-3, 1,3-bis(t-butylperoxyisopropyl)benzene, 2,5-dimethyl-2,5-di(benzoylperoxy)hexane, t-butyl peroxy benzoate, t-butylperoxypropyl carbonate, n-butyl-4,4' -di(t-butylperoxy)valerate, etc., and can be used in a proportion of 5-20 parts by weight, preferably 6.5-15 parts by weight, on the basis of 100 parts by weight of nitrile rubber. When the organic peroxide is used in a proportion less than lower limit of the range, any desired adhesiveness to the metal cannot be obtained, and the peeling of the rubber will occur, when exposed to friction and abrasion.

It is preferable to use about 0.5 to about 5 parts by weight of a polyfunctional unsaturated compound on the basis of 100 parts by weight of nitrile rubber, together with the organic peroxide. The polyfunctional unsaturated compound includes, for example, triallyl (iso)cyanurate, trimethylolpropane tri(meth)acrylate, triallyl trimellitate, etc.

The nitrile rubber composition comprising the afore-mentioned essential components can further appropriately contain various compounding agent generally used in the rubber industry, for example, a processing aid such as stearic acid, etc., an acid acceptor such as zinc oxide, magnesium oxide, hydrotalcite, etc., an antioxidant, and a plasticizer such as paraffinic, polyester-based, and the like plasticizers.

The afore-mentioned nitrile rubber composition can be dissolved or dispersed into a solvent having a boiling point of not higher than 250°C, such as ketones, aromatic hydrocarbons or mixture thereof without kneading the NBR composition, or after kneading only some of the ingredients of the NBR composition through a kneading machine such as Intermix, a kneader, a Banbury mixer, etc., or through open rolls or the like, thereby preparing a nitrile rubber coating agent. The nitrile rubber coating agent can be used to form the rubber layer of a rubber-metal laminate comprising metallic sheet, and an adhesive layer and a rubber layer successively laid upon one another on one side or both sides of the metallic sheet, and vulcanized preferably in an oxygen-free state. Vulcanization in the oxygen-free state is a treatment in an atmosphere of an inert gas such as nitrogen, argon, or the like, and can be carried out generally by press vulcanization at about 150° to about 250°C for about 20 seconds to about 30 minutes, whereby a rubber layer having a hardness (JIS A) of 92 or more, preferably 94-99, can be obtained. Such a rubber layer hardness is necessary for obtaining the desired friction-abrasion resistance.

The metallic sheet for use in the present invention includes stainless steel sheets, mild steel sheets, zinc-plated steel sheets, SPCC steel sheets, copper sheets, magnesium sheets, aluminum, sheets, aluminum die cast sheets, etc. The metallic sheets are used generally in a defatted state, and the metal surfaces are, if necessary, roughened by Shot blast, Scotch bride, Hair line, Dull Finish, etc. The sheet thickness is generally about 0.1 to about 1mm for use as seal materials.

A primer layer is preferably formed on the metallic sheet. The primer layer can considerably improve the heat resistance and water resistance of a rubber-metal laminate, as desired, and particularly in the case of using the rubber-metal laminate as seal materials, it is desirable to form the primer layer.

The primer layer includes, for example, inorganic films such as zinc phosphate films, iron phosphate films, films of compounds of metals such as vanadium, zirconium, titanium, molybdenum, tungsten, manganese, zinc, cerium, etc., particularly oxides of these metals, and organic films such as silanes, phenol resin, epoxy resin, polyurethane, etc. Generally, commercially available chemical solutions or well known art can be used as such. Preferably, a primer layer containing an organometallic compound having at least one each of chelate ring and alkoxy group, a primer layer further containing a metal oxide or silica in addition to the organometallic compound, and more preferably, a primer layer further containing a hydrolysis condensation product of an amino group-containing alkoxy silane and a vinyl group-containing alkoxysilane in addition to the afore-mentioned primer layer-forming components can be used. The hydrolysis condensation product alone can be used.

The organometallic compound includes, for example organoaluminum compounds such as ethylacetate aluminum diisopropylate, aluminum tris(ethyl acetoacetate), aluminum-mono-acetylacetonate-bis(ethyl acetoacetate), aluminum tris(acetylacetate), etc.; organotitanium compounds such as isopropoxytitanium bis(ethyl acetoacetate), 1,3-propanedioxytitanium bis(ethyl acetoacetate), diisopropoxytitanium bis(acetylacetonate), titanium tetra(acetylacetonate), etc.; organozirconium compounds such as di-n-butoxyzirconium bis(acetylacetonate), di-n-butoxyzirconium bis(ethyl acetoacetate), etc., and preferably organotitanium compounds, each comprising a chelate ring and an alkoxy group, represented by the following general formulae: 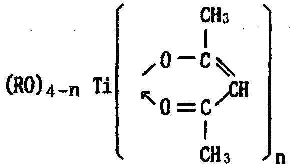 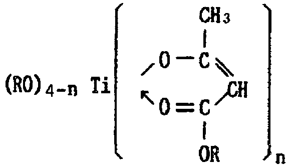 where R : a lower alkyl group such as CH₃, C₂H₅, n-C₃H₇, i-C₃H₇, n-C₄H₉, i-C₄H₉, etc.
n : an integer of 1-4.

The metal oxide to be added to the primer layer like silica includes, for example, alumina, titanium oxide, manganese oxide, zinc oxide, magnesium oxide, zirconium oxide, etc., and can be used in a ratio by weight to the organometallic compound of not more than 0.9, preferably not more than 0.45. When the metal oxide is used in a ratio more than 0.9, mixing of the metal oxide with other the primer components will be hard to attain. This is not preferable.

The amino group-containing alkoxysilane capable of forming a hydrolysis-condensation products includes, for example, 3-aminopropyltriethoxysilane, 3-aminopropyltrimethaxysilane, N-(2-aminomethyl)-3-aminopropyltrimethoxysilnae, etc. The vinyl group-containing alkoxysilane includes, for example, vinyltrimethoxysilane, vinyltriethoxysilane, vinyltris(β-methoxyethoxy)silane, etc. By mixing the amino group-containing alkoxysilane with water, adjusting pH to the acidic side, and adding thereto the vinyl group-containing alkoxysilane while keeping the temperature at 40 ° -60 °C with stirring, these alkoxysilanes can be made to undergo hydrolysis reaction, and poly condensation reaction at the same time to form a hydrolysis-condensation product. The vinyl group-containing alkoxysilane can be mixed with the amino group-containing alkoxysilane in a proportion of 25-400 parts by weight, preferably 50-150 parts by weight, on the basis of 100 parts by weight of the amino group-containing alkoxysilane. The resulting hydrolysis-condensation product can be used in a ratio by weight to the organometallic compound of not more than 3, preferably not more than 1.5. When the hydrolysis condensation product is used in a ratio of more than upper limit of the range, the compatibility with the adhesive will be deteriorated to lower the adhesiveness to the adhesive.

The primer comprising the afore-mentioned components can be prepared into a primer solution having a solid matter concentration of about 0.2 to about 5wt.% in an organic solvent, for example, alcohols such as methanol, ethanol, isopropyl alcohol, etc.; ketones such as acetone, methyl ethyl ketone, etc.; or the like. Such organic solvent solution can contain not more than 20wt.% of water, so long as the liquid stability can be maintained.

The resulting primer solution is applied to a metallic sheet at a deposition rate of about 50 to about 200mg/m² by spraying, dipping, brushes, roll coaters, etc., dried at room temperature or with hot air, followed by baking at about 100° to about 250°C for about 0.5 to about 20 minutes, thereby forming a primer layer.

The adhesive for use in the present invention includes silanes, phenol resin, epoxy resin, polyurethane, etc., and generally commercially available adhesives can be used as such. Preferably, an adhesive comprising two kinds of phenol resins, i.e. novolak type phenol resin and resol type phenol resin, and unvulcanized NBR can be used.

The novolak type phenol resin for use in the adhesive is resins having a melting point of 80° -150°C, prepared by condensation reaction of phenols having two or three substitutable nuclear hydrogen atoms at o⁻ and/or p⁻ positions relative to the phenolic hydroxyl group such as phenol, p-cresol, m-cresol, p-t-butyl phenol, etc. or a mixture thereof with formaldehyde in the presence of an acid catalyst such as oxalic acid, hydrochloric acid, maleic acid, or the like, preferably the phenol resin having a melting point of 120°C or more, prepared from m-cresol and formaldehyde.

The resol type phenol resin for use in the adhesive is resins prepared by condensation reaction of phenols having two or three substitutable nuclear hydrogen atoms at o⁻ and/or p⁻ positions relative to the phenolic hydroxyl group such as phenol, p-cresol, m-cresol, p-t-butyl phenol, etc., or a mixture thereof with formaldehyde in the presence of an alkali catalyst such as ammonia, an alkali metal hydroxide, magnesium hydroxide, or the like.

The unvulcanized NBR for use in the adhesive is commercially available various NBRs having an extremely high nitrile content (nitrile content : 43% or more), a high nitrile content (nitrile content : 36-42%), a high-intermediate a nitrile content (nitrile content : 31-35%), an intermediate nitrile content (nitrile content : 25-30%), and a low nitrile content (nitrile content : not more than 24%), which can be used as such. Preferably, the same one as used for forming the rubber layer can be used.

The adhesive comprising the afore-mentioned components is dissolved into a single organic solvent, for example, ketones such as methyl ethyl ketone, methyl isobutyl ketone, etc.; aromatic hydrocarbons such as toluene, xylene, etc., or the like, or into a mixture thereof and can be used in a solution state.

To form a preferable adhesive, the afore-mentioned components can be used in proportions of 10-1,000 parts by weight, preferably 60-400 parts by weight, of resol type phenol resin, and 30-3,000 parts by weight, preferably 60-900 parts by weight, of unvulcanized NBR on the basis of 100 parts by weight of novolak type phenol resin. These components each are dissolved into an organic solvent with mixing and stirring to make a total component concentration of about 3 to about 10wt.%, thereby obtaining a vulcanizable adhesive. When the resol type phenol resin is used in a proportion more than upper limit of the range, the adhesiveness of high nitrile rubber material will be lowered, whereas in a proportion less than lower limit of the range the adhesiveness to the metal surface will be lowered. This is not preferable. When the unvulcanized NBR is used in a proportion more than upper limit of the range, the adhesiveness to the metal surface will be lowered and the viscosity will be increased, resulting in troubles of coating work. In a proportion less than lower limit of the range, on the other hand, compatibility with nitrile rubber as adhesion target will be lowered, resulting in an adhesion failure. The adhesive can be prepared from these components by dissolving predetermined amounts of the individual components each into an organic solvent with mixing and stirring.

An adhesive layer can be formed on a metallic sheet free from a coating type chromate treatment, preferably on a primer layer-formed metallic sheet by applying the afore-mentioned adhesive solution to the metallic sheet, followed by air drying at room temperature and drying at about 100° to about 250°C for about 5 to about 30 minutes.

The adhesive layer can be not only in a single layer structure, but also in a multi-layer structure. For example, a phenolic adhesive layer containing an organometallic compound is formed on the primer layer, and then another phenolic adhesive layer containing the afore-mentioned nitrile rubber composition is provided thereon to form the adhesive layers at a plurality of stages, and then a rubber layer is formed thereon. The multi-layer structure inevitably suffers from an increasing number of coating steps for forming the adhesive layers, but can make the adhesiveness between the primer layer and the rubber layer stronger.

The afore-mentioned nitrile rubber coating agent is applied to the adhesive layer to a thickness of about 10 to about 200 µ m, followed by vulcanization. The rubber layer of the resulting rubber-metal laminate can be further coated with a resin-based, graphite-based, or the like coating agent to prevent the rubber from sticking.

### EXAMPLES

The present invention will be described in detail below, referring to Examples.

### EXAMPLE 1

| | Parts by weight |
|---|---|
| NBR (N235S, a product of JSR Co., nitrile content : 36%) | 100 |
| SRF carbon black (iodine absorption amount :29g/kg, DBP oil absorption amount : 72ml/100g) | 60 |
| White carbon (Nipseal LP, a product of Japan Silica Co., specific surface area : 200m²/g, particle size: 0.02 *µ* m) | 40 |
| Zinc oxide | 5 |
| Stearic acid | 2 |
| Antioxidant (Nocrac 224, a product of Ouchi-Sinko Chemical Co.) | 2 |
| Triallyl isocyanurate (Taic, a product of Nippon Kasei Co.) | 1.2 |
| 1,3-Bis(t-butylperoxyisopropyl)benzene (Sunperox TY-13, a product of Sanken Kako Co.) | 5 |

The foregoing ingredients were kneaded through a kneader and open rolls, and the resulting kneading product was subjected to determination of vulcanization speed. The vulcanization speed was determined according to JIS K6300-2 corresponding to ASTM D5289 by evaluating vulcanization characteristics at 180°C with a rotorless rheometer, made by Toyo Seiki Co., to regard the maximum torque M_{H} for the rate of cure as an index of cross-linking density.

The kneading product was press vulcanized at 180°C for 6 minutes, and test pieces, 2mm in thickness, were made therefrom and subjected to determination of hardness by a type A durometer according to JIS K6253 corresponding to ASTM D2240, and determination of tensile strength and elongation according to JIS K6251 corresponding to ASTM D412.

### [Preparation of rubber-metal laminates]

The surfaces of alkali-defatted, 0.2mm-thick stainless steel (SUS301, a product of Nissin Steel Co.) was coated with a silane-based primer comprising 1.0 parts by weight of titanium tetra(acetylacetonate), 2.5 parts by weight of alkoxysilane hydrolysis-condensation product, 10.0 parts by weight of water, and 86.5 parts by weight of methanol by dipping, followed by drying with hot air, and baking at about 200°C for 5 minutes to form a primer layer (deposition rate: 250mg/m²). The alkoxysilane hydrolysis-condensation product herein used was prepared in the following manner.

Into a flask with a stirrer, a heating jacket and a dropping funnel were charged 40 parts by weight of γ -aminopropyltriethoxysilane and 20 parts by weight of water, followed by adjusting the pH to 4-5 with acetic acid, and stirring for a few minutes. Then, 40 parts by weight of vinyltriethoxysilane was slowly added thereto through a dropping funnel while further stirring the mixture. After completion of the dropwise addition, the mixture was subjected to refluxing with heating at about 60°C for 5 hours, and then cooled to room temperature, whereby an alkoxysilane hydrolysis-condensation product was obtained.

The primer layer was coated with a solution of adhesive composition prepared by adding 2 parts by weight of unvulcanized NBR (N-237, a product of JSR Co., high-intermediate nitrile content) to 90 parts by weight of methyl ethyl ketone, and then adding 5 parts by weight of resol type phenol resin (Chemroc TS1677, a product of Rhode Far East Co.) and 3 parts by weight of chlorinated polyethylene (SE-200Z, a product of Daiso Co.) thereto, followed by air drying at room temperature and then heating at about 200°C for about 5 minutes to form on about 2 µ m-thick adhesive layer. Then, the afore-mentioned NBR composition was dissolved into a solvent mixture of toluene and methyl ethyl ketone (in a ratio by weight of 9:1) to make a solid matter concentration of 25wt.%, and the resulting rubber solution was subjected to determination of particle sizes in rubber solution as an index of dispersion state of carbon black, fillers, etc. (the desired particle sizes as the index not more than 20 µ m) according to JIS K5600 (ISO1524) corresponding to ASTM D1210, and then applied to the adhesive layer and dried to form an about 20 µ m-thick unvulcanized rubber layer, which was then press vulcanized at 180°C for 6 minutes in a nitrogen atmosphere to form an NBR rubber layer.

The surface of the vulcanized rubber layer thus formed was coated with a dispersion in toluene of Sazol wax containing polybutadiene resin, a cellulose resin binder, and graphite, followed by heating at 200°C for 5 minutes with hot air to form a 5 µ m-thick sticking-preventive layer, thereby preventing the vulcanized rubber layer from sticking. A rubber-metal laminate was prepared thereby.

The resulting rubber-metal laminate was subjected to a high temperature friction-abrasion test in the following manner :
High temperature friction-abrasion test : friction-abrasion evaluation was carried out by a reciprocal motion test using a rigid chromium-plated steel spherical friction tip, 10mm in diameter as a counter member in a surface state tester made by Shinto Kagaku Co. under conditions of moving speed : 400mm/min., reciprocal motion transfer span : 30mm, temperature : 150°C, and load : 2.5kg, according to JIS K7125 and P8147 corresponding to ASTM D1894 and D4521, respectively, to count the run number of reciprocal motion until the adhesive layer was exposed by abrasion of rubber

### EXAMPLE 2

In Example 1, the amount of 1,3-bis(t-butylperoxyisopropyl)benzene was changed to 8 parts by weight in the NBR composition.

### EXAMPLE 3

In Example 1, the amount of white carbon was changed to 20 parts by weight in the NBR composition.

### EXAMPLE 4

In Example 1, the amount of white carbon was changed to 20 parts by weight, and that of 1,3-bis(t-butylperoxyisopropyl)benzene to 8 parts by weight, respectively, in the NBR composition.

### COMPARATIVE EXAMPLE 1

In Example 1, the amount of 1,3-bis(t-butylperoxyisopropyl)benzene was changed to 2.5 parts by weight in the NBR composition.

### COMPARATIVE EXAMPLE 2

In Example 1, the amount of white carbon was changed to 10 parts by weight in the NBR composition.

### COMPARATIVE EXAMPLE 3

In Example 1, the amount of SRF carbon black was changed to 30 parts by weight in the NBR composition.

### COMPARATIVE EXAMPLE 4

In Example 1, the NBR composition was replaced with the following one comprising:

| | Parts by weight |
|---|---|
| NBR (N235S; nitrile content : 36%) | 100 |
| SRF carbon black (iodine absorption amount : 29g/kg, DBP oil absorption amount : 72ml/100g) | 80 |
| White carbon (Nipseal LP) | 20 |
| Calcium silicate | 40 |
| Calcium carbonate | 40 |
| Zinc oxide | 5 |
| Stearic acid | 2 |
| Antioxidant (Nocrac 224) | 2 |
| Triallyl isocyanurate (Taic) | 1.2 |
| 1,3-Bis(t-butylperoxyisopropyl)benzene (Sunperox TY-13) | 8 |

### COMPARATIVE EXAMPLE 5

In Comparative Example 4, the amount of 1,3-bis(t-butylperoxyisopropyl)benzene was changed to 2.5 parts by weight in the NBR composition.

### COMPARATIVE EXAMPLE 6

In Example 3, 40 parts by weight of HAF carbon black (iodine absorption amount : 82g/kg ; DBP oil absorption amount : 102ml/100g) was used in place of the SRF carbon black.

The results obtained in the foregoing Examples 1 to 4 and Comparative Examples 1 to 6 are given in the following Table 1.

**Table 1**

| | | Example | | | | Comparative Example | | | | | |
|---|---|---|---|---|---|---|---|---|---|---|---|
| Determination item | | 1 | 2 | 3 | 4 | 1 | 2 | 3 | 4 | 5 | 6 |
| Max. torque M_{H} | (dN· m) | 75 | 100 | 65 | 85 | 66 | 55 | 50 | 60 | 40 | 95 |
| Particle size in the rubber paste | (*µ*m) | 20≧ | 20≧ | 20≧ | 20≧ | 20≧ | 20≧ | 20≧ | 60 | 60 | ≧100 |
| Hardness | | 94 | 96 | 92 | 94 | 93 | 90 | 88 | 93 | 90 | 95 |
| Tensile strength | (MPa) | 22.9 | 24.9 | 20.0 | 23.5 | 20.5 | 19.0 | 18.0 | 18.0 | 16.2 | 25.0 |
| Elongation | (%) | 80 | 60 | 90 | 70 | 130 | 150 | 160 | 120 | 210 | 70 |
| High temp. friction-abrasion test (number of reciprocal motion) | | 200 | 250 | 160 | 180 | 20 | 60 | 30 | 15 | 5 | 90 |

### EXAMPLE 5

In Example 1, the NBR composition further containing 3 parts by weight of vinyltris(methoxyethoxy)silane (A-172, a product of Japan Unicar Co.) was used, where the rubber paste, prepared by dissolving the kneaded compound, which was left standing at 25°C for 10 days, into the solvent, was also subjected to determination of particle sizes in the paste.

### EXAMPLE 6

In Example 5, the amount of 1,3-bis(t-butylperoxyisopropyl)benzene was changed to 8 parts by weight in the NBR composition.

### EXAMPLE 7

In Example 5, the amount of 1,3-bis(t-butylperoxyisopropyl)benzene was changed to 8 parts by weight in the NBR composition, and 2 parts by weight of microcrystalline wax (Suntight R, a product of Seiko Chemical Co.) was further added thereto.

### EXAMPLE 8

In Example 5, the amount of 1,3-bis(t-butylperoxyisopropyl)benzene was changed to 8 parts by weight in the NBR composition, and 2 parts by weight of microcrystalline wax (Suntight R) and 15 parts by weight of calcium carbonate (Hakuenka cc, a product of Shiroishi Calcium Co.) were further added thereto.

### COMPARATIVE EXAMPLE 7

In Example 5, the amount of 1,3-bis(t-butylperoxyisopropyl)benzene was changed to 2.5 parts by weight in the NBR composition.

### COMPARATIVE EXAMPLE 8

In Example 8, the amount of calcium carbonate (Hakuenka cc) was changed to 60 parts by weight in the NBR composition.

### COMPARATIVE EXAMPLE 9

In Example 7, the amount of carbon black was changed to 30 parts by weight in the NBR composition.

The results obtained in the foregoing Examples 5 to 8 and Comparative Examples 7 to 9 are given in the following Table 2.

**Table 2**

| | | Example | | | | Comparative Example | | |
|---|---|---|---|---|---|---|---|---|
| Determination item | | 5 | 6 | 7 | 8 | 7 | 8 | 9 |
| Max. torque M_{H} Particle size in the rubber paste | (dN · m) | 80 | 110 | 100 | 113 | 70 | 115 | 80 |
| Immediately after kneading | (*µ*m) | 20≧ | 20≧ | 20≧ | 20≧ | 20≧ | 70 | 20≧ |
| After left standing for 10 days | (*µ*m) | 80 | 80 | 50 | 40 | 80 | 80 | 50 |
| Hardness | | 94 | 96 | 95 | 96 | 93 | 96 | 90 |
| Tensile strength | (MPa) | 23.5 | 25.5 | 24.5 | 22.5 | 21.5 | 19.0 | 21.5 |
| Elongation | (%) | 80 | 60 | 60 | 50 | 130 | 50 | 70 |
| High temp. friction-abrasion test (number of reciprocal motion) | | 250 | 300 | 310 | 270 | 60 | 40 | 80 |

## Claims

1. A process for producing a nitrile rubber-metal laminate, **characterized by** applying a nitrile rubber solution prepared by dissolving and dispersing a nitrile rubber composition comprising 100 parts by weight of a nitrile rubber, 40 parts by weight or more of carbon black having a DBP oil absorption amount of 30-100ml/100g (according to ASTM D1765-91), 15-100 parts by weight of silica having particle sizes of 0.01-0.1 µ m, 0-40 parts by weight of other inorganic filler than the carbon black and silica, and 5-20 parts by weight of an organic peroxide to an adhesive layer formed on one side or both sides of a metallic sheet, followed by vulcanizing the coated layer, thereby forming a rubber layer.

2. A process for producing a nitrile rubber-metal laminate according to Claim 1, wherein the metallic sheet is free from coating type chromate treatment.

3. A process for producing a nitrile rubber-metal laminate to Claim 1, wherein the nitrile rubber composition contains 50-100 parts by weight of the carbon black.

4. A process for producing a nitrile rubber-metal laminate according to Claim 1, wherein the nitrile rubber composition contains 3-20 parts by weight of the other inorganic filler than the carbon black and silica.

5. A process for producing a nitrile rubber-metal laminate according to Claim 4, wherein the other inorganic filler is calcium carbonate.

6. A process for producing a nitrile rubber-metal laminate according to Claim 1, wherein the nitrile rubber composition further contains 2-10 parts by weight of a silane coupling agent.

7. A process for producing a nitrile rubber-metal laminate according to Claim 6, wherein the nitrile rubber composition further contains 0.5-5 parts by weight of microcrystalline wax.

8. A process for producing a nitrile rubber-metal laminate according to Claim 1, 6 or 7, wherein the rubber layer has a hardness (JIS A) of 92 or higher.

9. A nitrile rubber-metal laminate produced by a process according to Claim 1, 6 or 7.

10. A nitrile rubber-metal laminate according to Claim 9 for use as a seal material.

## Patentansprüche

1. Verfahren zur Herstellung eines Nitrilgummi-Metalllaminats, **dadurch gekennzeichnet, dass** eine Nitrilkautschuklösung, die durch Auflösen und Verteilen einer Nitrilkautschukzusammensetzung, umfassend 100 Gew.-Teile eines Nitrilkautschuks, 40 oder mehr Gew.-Teile Ruß mit einer DBP-Ölabsorptionsmenge von 30 bis 100 ml/100 g (gemäß ASTM D1765-91), 15 bis 100 Gew.-Teile Silika mit Teilchengrößen von 0,01 bis 0,1 µm, 0 bis 40 Gew.-Teile eines anderen anorganischen Füllstoffes als Ruß und Silika und 5 bis 20 Gew.-Teile eines organischen Peroxids, hergestellt wird, auf eine Haftschicht, die auf einer Seite oder beiden Seiten eines Metallblechs gebildet ist, aufgebracht wird, gefolgt von Vulkanisieren der beschichteten Schicht, wodurch eine Gummischicht gebildet wird.

2. Verfahren zur Herstellung eines Nitrilgummi-Metalllaminats gemäß Anspruch 1, worin das Metallblech frei von einer Chromatbehandlung in Form einer Beschichtung ist.

3. Verfahren zur Herstellung eines Nitrilgummi-Metalllaminats gemäß Anspruch 1, worin die Nitrilkautschukzusammensetzung 50 bis 100 Gew.-Teile Ruß enthält.

4. Verfahren zur Herstellung eines Nitrilgummi-Metalllaminats gemäß Anspruch 1, worin die Nitrilkautschukzusammensetzung 3 bis 20 Gew.-Teile des anorganischen Füllstoffs, der von Ruß und Silika verschieden ist, enthält.

5. Verfahren zur Herstellung eines Nitrilgummi-Metalllaminats gemäß Anspruch 4, worin der anorganische Füllstoff Kalziumcarbonat ist.

6. Verfahren zur Herstellung eines Nitrilgummi-Metalllaminats gemäß Anspruch 1, worin die Nitrilkautschukzusammensetzung weiterhin 2 bis 10 Gew.-Teile eines Silkankupplungsreagenzes enthält.

7. Verfahren zur Herstellung eines Nitrilgummi-Metalllaminats gemäß Anspruch 6, worin die Nitrilkautschukzusammensetzung weiterhin 0,5 bis 5 Gew.-Teile mikrokristallines Wachs enthält.

8. Verfahren zur Herstellung eines Nitrilgummi-Metalllaminats gemäß Anspruch 1, 6 oder 7, worin die Gummischicht eine Härte (JIS A) von 92 oder mehr hat.

9. Nitrilgummi-Metalllaminat, welches durch ein Verfahren gemäß Anspruch 1, 6 oder 7 hergestellt ist.

10. Nitrilgummi-Metalllaminat gemäß Anspruch 9 für die Verwendung als Dichtungsmaterial.

## Revendications

1. Processus pour la production d'un stratifié de métal et de caoutchouc nitrile, **caractérisé par** une application d'une solution de caoutchouc nitrile, préparée par dissolution et dispersion d'une composition de caoutchouc nitrile comprenant 100 parties en poids d'un caoutchouc nitrile, 40 parties en poids ou plus d'un noir de carbone ayant une capacité d'absorption d'huile DBP allant de 30 à 100 ml/100 g (selon la norme ASTM D1765-91), entre 15 et 100 parties en poids d'une silice ayant des diamètres de particules allant de 0,01 à 0,1 µm, entre 0 et 40 parties en poids d'une charge minérale autre que le noir de carbone et la silice, entre 5 et 20 parties en poids d'un peroxyde organique, à une couche adhésive formée sur un côté ou les deux côtés d'une feuille métallique, suivie par une vulcanisation de la couche de revêtement, ce qui permet de former une couche de caoutchouc.

2. Processus pour la production d'un stratifié de métal et de caoutchouc nitrile selon la revendication 1, dans lequel la feuille métallique est exempte de traitement au chromate de type revêtement.

3. Processus pour la production d'un stratifié de métal et de caoutchouc nitrile selon la revendication 1, dans lequel la composition de caoutchouc nitrile contient entre 50 et 100 parties en poids du noir de carbone.

4. Processus pour la production d'un stratifié de métal et de caoutchouc nitrile selon la revendication 1, dans lequel la composition de caoutchouc nitrile contient entre 3 et 20 parties en poids de la charge minérale autre que le noir de carbone et la silice.

5. Processus pour la production d'un stratifié de métal et de caoutchouc nitrile selon la revendication 4, dans lequel l'autre charge minérale est du carbonate de calcium.

6. Processus pour la production d'un stratifié de métal et de caoutchouc nitrile selon la revendication 1, dans lequel la composition de caoutchouc nitrile contient en outre entre 2 et 10 parties en poids d'un agent de couplage au silane.

7. Processus pour la production d'un stratifié de métal et de caoutchouc nitrile selon la revendication 6, dans lequel la composition de caoutchouc nitrile contient en outre entre 0,5 et 5 parties en poids d'une cire microcristalline.

8. Processus pour la production d'un stratifié de métal et de caoutchouc nitrile selon la revendication 1, 6 ou 7, dans lequel la couche de caoutchouc a une dureté (JIS A) supérieure ou égale à 92.

9. Stratifié de métal et de caoutchouc nitrile produit par un processus selon la revendication 1, 6 ou 7.

10. Stratifié de métal et de caoutchouc nitrile selon la revendication 9 destiné à être utilisé en tant que matériau d'étanchéité.
